(19) **Europäisches Patentamt / European Patent Office / Office européen des brevets**

(11) **EP 1 745 576 B1**

(12) **EUROPEAN PATENT SPECIFICATION**

(45) Date of publication and mention
of the grant of the patent:
**07.12.2011 Bulletin 2011/49**

(21) Application number: **05737839.0**

(22) Date of filing: **06.05.2005**

(51) Int Cl.:
*H04L 1/00* (2006.01)     *H04L 1/06* (2006.01)

(86) International application number:
**PCT/IB2005/001236**

(87) International publication number:
**WO 2005/109717 (17.11.2005 Gazette 2005/46)**

(54) **SELECTIVE PER ANTENNA RATE CONTROL IN A WIRELESS COMMUNICATIONS NETWORK**

SELEKTIVE PRO-ANTENNE RATENSTEUERUNG IN EINEM DRAHTLOSEN KOMMUNIKATIONSNETZWERK

COMMANDE DE DEBIT PAR ANTENNE SELECTIVE DANS UN RESEAU DE COMMUNICATION SANS FIL

(84) Designated Contracting States:
**AT BE BG CH CY CZ DE DK EE ES FI FR GB GR HU IE IS IT LI LT LU MC NL PL PT RO SE SI SK TR**

(30) Priority: **07.05.2004 US 841911**

(43) Date of publication of application:
**24.01.2007 Bulletin 2007/04**

(60) Divisional application:
**10180939.0 / 2 293 479**

(73) Proprietor: **Telefonaktiebolaget L M Ericsson (publ)**
**164 83 Stockholm (SE)**

(72) Inventors:
• **GRANT, Stephen**
**Cary, NC 27513 (US)**
• **WANG, Yi-Pin, Eric**
**Cary, NC 27513 (US)**
• **RAMESH, Rajaram**
**Cary, NC 27511 (US)**
• **MOLNAR, Karl, James**
**Cary, NC 27513 (US)**
• **CHENG, Jung-Fu, Thomas**
**Cary, NC 27513 (US)**
• **KRASNY, Leonid**
**Cary, NC 27511 (US)**

(74) Representative: **HOFFMANN EITLE**
**Patent- und Rechtsanwälte**
**Arabellastraße 4**
**81925 München (DE)**

(56) References cited:
**EP-A- 1 187 385     WO-A-02/03568**

**Description**

**BACKGROUND OF THE INVENTION**

Field of the Invention

The present invention relates in general to the implementation of a selective-per-antenna-rate-control (S-PARC) technique in a wireless communications network (e.g., third generation communications network). In particular, the S-PARC technique can be effectively implemented in the wireless communications network by enabling a mobile terminal device to generate and transmit a feedback signal (e.g., "full" or "reduced" feedback signal) to a base station that analyzes the feedback signal and determines which mode and transmission rate(s) are going to be used to transmit data substream (s) to the mobile terminal device.

Description of Related Art

Today there is a very high level of interest in enhancing the data rates of multiple-input-multiple-output (MIMO) antenna systems used in third generation cellular systems that implement the high-speed-downlink-packet-access (HSDPA) provision of the Wideband Code Division Multiple Access (WCDMA) standard. Recently, a promising new MIMO technique called PARC (Per-Antenna-Rate-Control) has been proposed to enhance the data rates of the MIMO antenna systems used in third generation cellular systems. The PARC technique is based on a base station that has a combined transmit/receive architecture which performs independent coding of antenna streams at different rates that are transmitted to and decoded at the mobile terminal device. Unfortunately, the PARC technique is limited to the case where the number of transmitted data streams is strictly equal to the number of transmit antennas in the base station. This is problematic since the base station can transmit too many data streams to the mobile terminal device which can cause interference at the mobile terminal device. The present invention solves this problem by implementing a Selective-PARC technique, or S-PARC for short, where the base station is not limited as it is with the PARC technique since the number of transmitted data streams need not equal the number of transmit antennas which can reduce the interference at the mobile terminal device and improve the throughput to the mobile terminal device.

From EP 1 187 385 A1 a method of controlling data transmission in a communication channel is known. The base station receives a message containing at least two sets of bits. The first set of bits is a plurality of bits specifying a data rate, and the second set of bits specifies a transmit configuration.

From WO 02/03568 A a receive unit for receiving signals from a transmit unit through a channel with N receive antennas is known. A feed back block can send channel parameters, e.g., in the form of mode number to the transmit unit. A selection block communicates its mode selection for each transmit antenna to the transmit unit by sending the mode number.

**BRIEF DESCRIPTION OF THE INVENTION**

The present invention is defined in the appended independent claims. Advantageous embodiments of the present invention are given in the dependent claims. The present invention includes a method that enables the S-PARC technique to be effectively implemented in a wireless communications network (e.g., HSPDA third generation communications network). In one embodiment, the method enables the S-PARC technique to be implemented in the wireless communications network by enabling a mobile terminal device to generate and transmit a "reduced" feedback signal to a base station that analyzes the "reduced" feedback signal and determines which mode and transmission rate(s) are going to be used to transmit data substream(s) from selected transmit antenna(s) to the mobile terminal device.

**BRIEF DESCRIPTION OF THE DRAWINGS**

A more complete understanding of the present invention may be obtained by reference to the following detailed description when taken in conjunction with the accompanying drawings wherein:

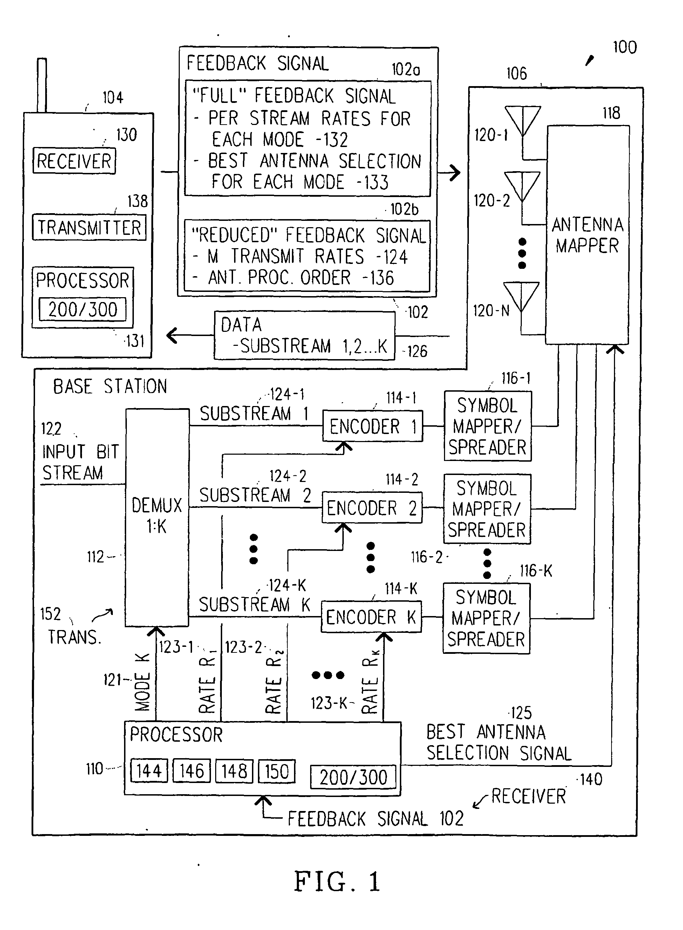

FIGURE 1 is a block diagram of a wireless communications network that includes a base station and a mobile terminal device both of which implement the S-PARC technique in accordance with two methods of the present invention;

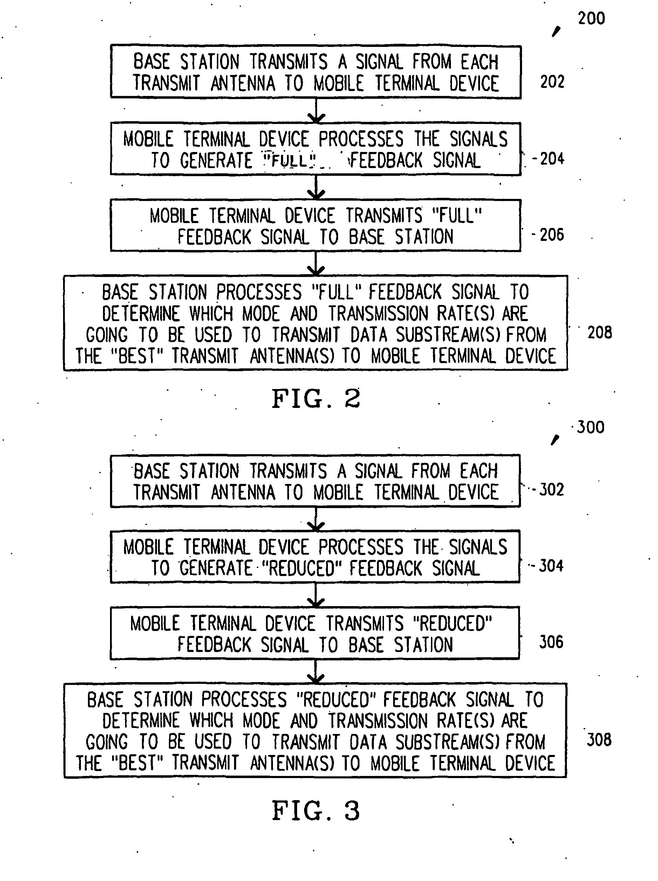

FIGURE 2 is a flowchart illustrating the steps of a method for implementing the S-PARC technique in the wireless communications network shown in FIGURE 1 by enabling a mobile terminal device to generate and transmit a "full" feedback signal to a base station that analyzes the "full" feedback signal and determines which mode and transmission rate(s) are going to be used to transmit data substream(s) from selected transmit antenna(s) to the mobile terminal device in accordance with the present invention;

FIGURE 3 is a flowchart illustrating the steps of a method for implementing the S-PARC technique in the wireless communications network shown in FIGURE 1 by enabling a mobile terminal device to generate and transmit a "reduced" feedback signal to a base station that analyzes the "reduced" feedback signal and determines which mode and transmission rate(s) are going to be used to transmit data substream(s) from selected transmit antenna (s) to the mobile terminal device in accordance with the present invention;

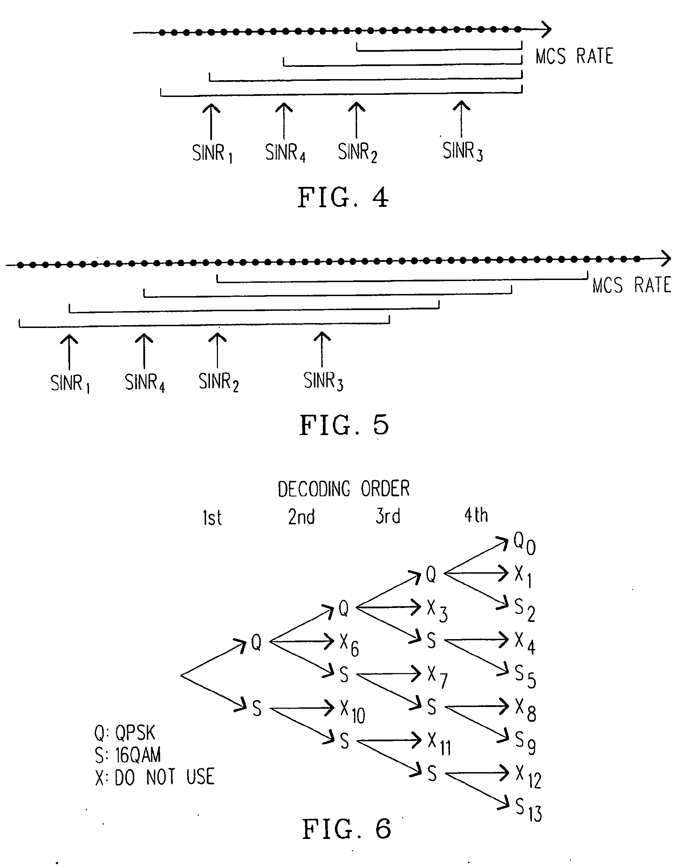

FIGURE 4 is a block diagram illustrating how the mobile terminal device can utilize the sequential nature of one part (antenna processing order) of the "reduced" feedback signal to further reduce the number of bits needed to generate another part (M-transmit rates) in the "reduced" feedback signal that is sent to the base station;

FIGURE 5 is a block diagram illustrating how the mobile terminal device can utilize the sequential nature of one part (antenna processing order) of the "reduced" feedback signal to enable higher rate modulation and coding schemes (MCS) so as to avoid a potential MCS limitation in the wireless communications network; and

FIGURE 6 is a diagram illustrating how the base station can utilize the sequential nature of one part (antenna processing order) of the "reduced" feedback signal to enable the base station to reduce the number of bits needed to notify the mobile terminal device of the exact composition of the data to be sent to the mobile terminal device.

## DETAILED DESCRIPTION OF THE DRAWINGS

Referring to FIGURE 1, there is shown a block diagram of a preferred wireless communications network 100 (e.g., third generation cellular system that implements the HSDPA provision of the WCDMA standard) which can implement the S-PARC technique by using either one of the two methods 200 and 300 of the present invention. It should be appreciated that certain details associated with the components within the wireless communications network 100 like the mobile terminal device 104 (only one shown) and the base station 106 (only one shown) are well known in the industry. Therefore, for clarity, the description provided below in relation to the mobile terminal device 104 and the base station 106 omits those well known details and components that are not necessary to understand the present invention.

As shown in FIGURE 1, the base station 106 includes a processor 110, a demultiplexer 112, multiple encoders 114-1, 114-2...114-K, multiple symbol mappers/spreaders 116-1, 116-2...116-K, an antenna mapper 118 and multiple transmit antennas 120-1, 120-2...120-N. In accordance with the S-PARC technique, a data bit stream 122 is input to the demultiplexer 112 and demultiplexed into one or more substreams 124-1, 124-2...124-K. The actual number of substreams 124-1, 124-2...124-K output from the demultiplexer 112 depends on the mode-K signal 121 sent by the processor 110 to the demultiplexer 112. And, each of the substreams 124-1, 124-2...124-K output by the demultiplexer 112 are processed by the corresponding encoders 114-1, 114-2...114-K and symbol mappers/spreaders 116-1, 116-2...116-K. The rate of each substream 124-1, 124-2...124-K depends on the rate signals 123-1, 123-2...123-K sent by the processor 110 to the corresponding encoders 114-1, 114-2...114-K. Then the coded substreams 124-1, 124-2...124-K (shown collectively as transmitted data 126) are transmitted by a subset of transmit antennas 120-1, 120-2...120-N to the mobile terminal device 102. The particular subset of antennas 120-1, 120-2...120-N selected to transmit the coded substreams 124-1, 124-2...124-K depends on the best antenna selection signal 125 sent by the processor 110 to the antenna mapper 118. It should be appreciated the K is the transmitted mode and is equal to or less than N.

To accomplish all of this, the processor 110 processes the feedback signal 102 (Channel Quality Indicator (CQI) feedback signal 102) received from the mobile terminal device 104 and then outputs the mode-K signal 121, the rate signals 123-1, 123-2...123-K and the best antenna selection signal 125 to respectively control the operation of the demultiplexer 112, the encoder(s) 114-1, 114-2...114-K and the antenna mapper 118. A more detailed discussion about how the mobile terminal device 104 generates the feedback signal 102 ("full" feedback signal 102a and "reduced" feedback signal 102b) and how the processor 110 processes the feedback signal 102 so it can control the demultiplexer 112, encoders 114-1, 114-2...114-K and antenna mapper 118 is provided below with respect to methods 200 and 300 shown in FIGURES 2-3.

Basically, method 200 enables the S-PARC technique to be effectively implemented in the wireless communications network 100 by enabling the mobile terminal device 104 to generate and transmit the "full" feedback signal 102a to the base station 106 that analyzes the "full" feedback signal 102a and determines which mode and transmission rate(s) are going to be used to transmit data substream(s) 124-1, 124-2...124-K from the "best" subset of transmit antenna (s) 120-1, 120-2...120-N to the mobile terminal device 104. Again, the S-PARC technique is where the number of transmitted data streams 124-1, 124-2...124-K can be less than the number of transmit antennas 120-1, 120-2...120-N. For clarity, a brief description about the traditional "single-transmit-antenna" HSDPA technique is provided before a detailed description about method 200. The conventional "single-antenna" HSDPA technique has a philosophy where the base station is allowed to control the rate of the data stream transmitted to the mobile terminal device 104 by using the available transmit power, available number of codes, and available data in queue. The rate that the mobile terminal device 104 feeds back to the base station 106 is treated as a suggestion only. Depending on the actual allocations, the transmitted rate may be different than the rate that was suggested by the mobile terminal device 104. In order to utilize the S-PARC technique, the base station 106 should also have control over the actual number of transmitted data streams and their rates so as to follow the aforementioned philosophy. Consequently, to implement method 200, the base station 106 requires information from the mobile terminal device 104 about the per-stream rates for each possible mode as well as the corresponding "best" antenna selections. The term "best" antenna selection represents the particular antenna(s) that maximize the sum rate for a given mode.

As shown in FIGURE 2, method 200 indicates how the mobile terminal device 104 generates and transmits this information in a "full" feedback signal 102a to the base station 106. First, the base station 106 transmits (step 202) a signal (not shown) from each of the antennas 120-1, 120-2...120-N to a receiver 130 in the mobile terminal device 104. These signals can be anyone of the following: (1) pilot signals; (2) K-data signals plus one or more pilot signals (if needed); and (3) any other signals from the transmit antennas. A processor 131 in the mobile terminal device 104 then processes these signals and generates (step 204) the "full" feedback signal 102a which includes (1) per stream rate indicators for each possible mode 132 (i.e., for mode=1 there is 1 stream transmission and for mode=2 there are 2 stream transmissions, etc.) and (2) the "best" antenna selection for each mode 133 that could be used to transmit data substream(s) to the mobile terminal device 104. Note that, in step 204, the per stream rate indicators are determined based on agreed-upon base station power and code allocations. The agreed-upon power allocation can be evenly distributed among active antennas. For example, if the power allocation is P, the mobile terminal device 104 determines the per stream rate indicators for mode k assuming the transmit power per active antenna is P/k. Then a transmitter 138 in the mobile terminal device 104 transmits (step 206) the "full" feedback signal 102a to the base station 106. Thereafter, the processor 110 within the base station 106 processes (step 208) the "full" feedback signal 102a to determine which mode and transmission coding rate(s) are going to be used to transmit data 126 (one or more coded substreams 124-1, 124-2...124-K) from the "best" subset of transmit antenna 120-1, 120-2...120-N to the mobile terminal device 104. In this process, the processor 110 adjusts the reported per stream rate indicators according to the instantaneous power and code allocations, which could be different from the previous agreed-upon values at the time when the mobile terminal device 104 was determining the per stream rate indicators. In this case, the per stream rate indicator is first converted to a per stream SINR, $\square_i$. Then the per stream SINR is adjusted through simple scaling operations to account for the difference between the agreed-upon and instantaneous power and code allocations. For example, if the agreed-upon power and code allocations for transmit antenna i are $P_i$ and $J_i$, respectively, and the instantaneous power and code allocations for transmit antenna i are $P'_i$ and $J'_i$, respectively, the original reported per stream SINR can be adjusted using:

$$(\gamma'_i)_{dB} = (\gamma_i)_{dB} + q_{p,i}(\frac{P'_i}{P_i})_{dB} + q_{c,i}(\frac{J'_i}{J_i})_{dB}, \quad (1)$$

where $q_{p,i}$ and $q_{c,i}$ are the scaling slopes for power adjustment and code allocation adjustment, respectively, and the notation $(x)dB=10\log_{10}(x)$. As noted the scaling slopes may vary across antennas. It was found that the scaling slope $q_{p,i}$ is a positive number between 0 and 1, whereas the scaling slope $q_{n,i}$ is a negative number between -1 and 0. Furthermore, these scaling slopes have larger magnitudes for an antenna which is later processed according to the antenna processing order. The adjusted SINR can be mapped to a new per stream rate indicator. After these scaling operations, the processor 110 could select mode-1 and then the transmitted data 126 would include one coded substream 124-1 (for example) that is transmitted by the "best" antenna 120-2 (for example). Alternatively, the processor 110 could select mode-3 then the transmitted data 126 would include three different coded substreams 124-1, 124-2 and 124-3 which are transmitted by the "best" antennas 120-1, 120-2 and 124-4 (for example). Again, the base station 106 knows the "best" antenna(s) for each mode due to the information in the "full" feedback signal 102a.

If the base station 106 has N transmit antennas and M possible modes then the number of required bits using this full feedback approach of method 200 would be:

$$N_b = \sum_{n=1}^{M} \left( 5n + \left\lceil \log_2 \binom{N}{n} \right\rceil \right) \quad (2)$$

where: M = set limit of number of selected modes where the mobile terminal device 104 and base station 106 determine this number during the call set-up (for example). The selected mode corresponds to the number of transmitted data streams 124-1, 124-2...124-K.

N = number of transmit antennas 120-1, 120-2...120-N at the base station 106 (M≤N).

n = indexes the modes.

The 5M term in the summation is the number of bits required to feedback M rates. Since the HSPDA/WCDMA standard currently specifies 30 possible modulation coding scheme (MCS) rates, the number of bits required per rate is 5. It should be noted that 5 bits is what is used in the current HSPDA/WCDMA standard and as such this number could be changed. The log term is the number of bits required to feedback the best antenna selection when only n antennas are selected out of a possible N. As such, for a MIMO antenna system with N=4 transmit antennas and M possible modes, the required amount of feedback is $N_b$=57 bits. The 57 bits are needed to identify the 10 per-stream rates for modes 1-4 (e.g., mode 1 has 1 per-stream rate and mode 3 has 3 per-stream rates) and to identify the 4 best antenna selections for modes 1-4. Although the "full" feedback signal 102a and method 200 work well it would be desirable to reduce the feedback load of the mobile terminal device 104 as is done with the "reduced" feedback signal 102b of method 300 which is described next with respect to FIGURES 3-6.

Basically, method 300 enables the S-PARC technique to be effectively implemented in the wireless communications network 100 by reducing the number of bits needed in the feedback signal 102 which is sent from the mobile terminal device 104 to the base station 106. Again, in the S-PARC technique the number of transmitted data streams 124-1, 124-2...124-K can be less than the number of transmit antennas 120-1, 120-2...120-N. This is accomplished by transmitting (step 302) a signal (not shown) from each of the antennas 120-1, 120-2...120-N in the base station 106 to a receiver 130 in the mobile terminal device 104. These signals can be anyone of the following: (1) pilot signals; (2) K-data signals plus one or more pilot signals (if needed); and (3) any other signals from the transmit antennas 120-1, 120-2...120-N. A processor 131 in the mobile terminal device 104 then processes these signals and generates (step 304) the "reduced" feedback signal 102b which includes only (1) M-transmit rates 134 and (2) a single antenna processing order 136 which indicates for each mode the "best" selection of transmit antenna(s) that could be used to transmit data substream(s) to the mobile terminal device 104. Note that, in step 304, the per stream rate indicators are determined based on agreed-upon base station power and code allocations. The agreed-upon power allocation can be evenly distributed among active antennas. For example, if the power allocation is P, the mobile terminal device determines the per stream rate indicators for mode k assuming the transmit power per active antenna is P/k. Then a transmitter 138 in the mobile terminal device 104 transmits (step 306) the "reduced" feedback signal 102b to the base station 106. Thereafter, the processor 110 within the base station 106 processes (step 308) the "reduced" feedback signal 102b to determine which mode and transmission coding rate(s) are going to be used to transmit data 126 (one or more coded substreams 124-1, 124-2...124-K) from the "best" subset of antenna(s) 120-1, 120-2...120-N to the mobile terminal device 104. In this process, the processor 110 adjusts the reported per stream rate indicators according to the instantaneous power and code allocations, which could be different from the previous agreed-upon values at the time when the mobile terminal device was determining the per stream rate indicators. In this case, the per stream rate indicator is first converted to a per stream SINR, $\gamma_i$. Then the per stream SINR is adjusted through simple scaling operations to account for the difference between the agreed-upon and instantaneous power and code allocations. For example, if the agreed-upon power and code allocations for transmit antenna i are $P_i$ and $J_i$, respectively, and the instantaneous power and code allocations for transmit antenna i are $P'_i$ and $J'_i$, respectively, the original reported per stream SINR can be adjusted using:

$$(\gamma'_i)_{dB} = (\gamma_i)_{dB} + q_{p,i}(\frac{P'_i}{P_i})_{dB} + q_{c,i}(\frac{J'_i}{J_i})_{dB}, \qquad (3)$$

where $q_{p,i}$ and $q_{c,i}$ are the scaling slopes for power adjustment and code allocation adjustment, respectively, and the notation (x)dB=$10\log_{10}$(x). As noted the scaling slopes may vary across antennas. It was found that the scaling slope $q_{p,i}$ is a positive number between 0 and 1, whereas the scaling slope $q_{n,i}$ is a negative number between -1 and 0. Furthermore, these scaling slopes have larger magnitudes for an antenna which is later processed according to the antenna processing order. The adjusted SINR can be mapped to a new per stream rate indicator. After these scaling operations, the processor 110 could select mode-1 and then the transmitted data 126 would include one coded substream 124-1 (for example) that is transmitted by the "best" antenna 120-2. Alternatively, the processor 110 could select mode-3 then the transmitted data 126 would include three different coded substreams 124-1, 124-2 and 124-3 which are transmitted by the "best" antennas 120-1, 120-2 and 124-4 (for example). Again, the base station 106 knows the "best" antenna(s) for each mode due to the antenna processing order 136 in the "reduced" feedback signal 102b.

As can be seen, the base station 106 using the "reduced" feedback signal 102b from the mobile terminal device 104 has the tasks of selecting the best mode and determines what coding rates are to be used for the selected mode to transmit the data substreams 124-1, 124-2...124-K to the mobile terminal device 104. The mode selection is based in part on the M-transmit rates 134 and the antenna processing order 136 in the received "reduced" feedback signal 102b. Usually, the mode with the largest sum rate (across the substreams) is chosen; however, the decision also takes into account factors such as the power and code allocations as well as the amount of data in queue awaiting transmission. The per-substream coding rates chosen by the base station 106 also take into account these factors. The base station 106 also uses the "reduced" feedback signal 102b to generate the best antenna selection signal 105 to activate the "best" subset of antennas 120-1, 120-2...120-N. Again, the mobile terminal device 104 determines which subset of antennas 120-1, 120-2...120-N for each mode supports the largest sum rate, and reports back the best subsets for all modes in the single antenna processing order 136.

Ideally, for the base station 106 to select the mode and rate it requires n rates and one antenna selection for each of the possible modes for n=1,2,...,M. As described above with respect to the "full" feedback signal 102a and method 200 the total number of bits required for this amount of feedback is given in Equation #1 and, as noted before, this number can become quite large. For example, for the case of N=4 transmit antennas, the total number of feedback bits for all four modes is $N_b$=57. The 57 bits are needed to identify the 10 per-stream rates for modes 1-4 (e.g., mode 1 has 1 per-stream rate and mode 3 has 3 per-stream rates) and to identify the 4 best antenna selections for modes 1-4. Although the "full" feedback signal 102a can work well it is still desirable to reduce the feedback load of the mobile terminal device 104 as is done with the "reduced" feedback signal 102b and method 300. Again, method 300 proposes an approach whereby the amount of this feedback is significantly reduced. The reduction is based in part on restricting the possible antenna selections such that the selections for all modes obey a certain property that is described herein as the "subset property". A detailed discussion about how the mobile terminal device 104 can generate the antenna processing order 136 is provided below with respect to the example in TABLE #1.

TABLE #1 shows the full set of possible antenna combinations for each possible mode when there are N=4 antennas. For the modes indexed by n=1, 2...N there are respectively 4, 6, 4 and 1 possible antenna combinations. The particular antenna combinations shown in boldface illustrate one example of antenna selections which obey the subset property, defined as follows. The antenna selections obey the subset property if, for all n= 2, 3,...,N, the antenna selections for mode-(n-1) are a subset of those for mode-n. Furthermore, the antenna selection should be ordered such that the last n-1 antenna indices for mode-n appear in the same order as the antenna indices for mode-(n-1).

TABLE #1

| MODE (n) | | | |
|---|---|---|---|
| 1 | 2 | 3 | 4 |
| 1<br>2<br>3<br>4 | 1,3<br>2,3<br>4,3 | 1,2,3<br>4,2,3 | 1,4,2,3 |
| | 1,2<br>1,4<br>2,4 | 1,2,4<br>1,3,4 | |

To guarantee that the antenna selections obey the subset property, the following selection strategy may be implemented in the mobile terminal device 104. While the strategy described below is for the case of N=4 transmit antennas and for modes n= 1, 2, 3 and 4 it should be noted that the approach may be extended to different numbers of antennas and modes.

For mode-1, the mobile terminal device 104 chooses the transmit antenna that supports the largest transmission rate. In one embodiment, the mobile terminal device 104 can calculate the transmission rates of antennas 1, 2, 3 and 4 by estimating the SINR of a signal received from each transmit antenna 1, 2, 3, and 4. Each SINR is then mapped to a rate through a look-up table which contains switching points for the various modulation and coding schemes used for HSDPA. Alternatively, the mapping of SINR to rate can be based on a per-substream capacity formula (i.e., bits per channel use is equal to $\log_2(1+SINR)$). In the example shown in TABLE #1, the "best" antenna (i.e., the one with the largest SINR, and thus rate) is antenna 3 which is shown in boldface.

For mode-2, the mobile terminal device 104 restricts the possible antenna combinations for mode-2 to those for which the mode-1 antenna is a subset. In the example shown in TABLE #1, these combinations are {1, 3}, {2, 3}, and {4, 3}. The order of the latter combination is reversed so that the three possible antenna combinations all have the mode-1 antenna selection (antenna 3) as the second entry. The reason for this is because successive interference cancellation (SIC) is employed at the receiver 130 in the mobile terminal device 104. Consequently, the interference due to the first antenna in each of the possible antenna combinations is removed after the first stage of SIC. The SINR for the second stage of SIC is thus identical, within a scale factor, to the SINR estimated for mode-1. The scale factor accounts for the division of transmit power across multiple transmit antennas. This would not be true if one did not restrict the possible antenna combinations to obey the subset property. As a result, it is only necessary to estimate the SINR for the first stage of SIC for each of the three possible antenna combinations and then map the SINR to a rate. The rate corresponding to the second stage is identical, within a scale factor, to that determined for mode-1. In the example shown in TABLE #1, the "best" antenna combination (i.e., the one with the largest sum rate) is {2,3} shown in boldface.

It should be appreciated that the base station 104 also has knowledge of the scale factor since it knows how the power is divided amongst the transmit antennas 1, 2, 3 and 4.

For mode-3, the mobile terminal device 104 restricts the possible antenna combinations for mode-3 to those for which the mode-2 antennas are a subset. In the example shown in TABLE #1, these combinations are {1, 2, 3} and {4, 2, 3}. The order of the latter combination is changed so that the two possible antenna combinations both have the mode-2 antenna selections (i.e., antennas {2, 3}) as the second and third entries, respectively. This implies that the interference due to the first antenna in both possible antenna combinations is removed after the first stage of SIC. The SINRs for the 2nd and 3rd stages are thus identical, within a scale factor, to those estimated for modes-2 and 1. This would not be true if one did not restrict the possible antenna combinations to obey the subset property. Again, it is only necessary to estimate the SINR for the first stage of SIC for both of the antenna combinations and then map the SINR to a rate. The rates corresponding to the second and third stages are identical, within a scale factor, to those determined for modes-2 and 1. In the example shown in TABLE #1, the "best" combination (i.e., the one with the largest sum rate) is {4, 2, 3} shown in boldface.

For mode-4, the mobile terminal device 104 at this point has only one possible antenna combination {1, 4, 2, 3} and it automatically contains the mode-3 selection {4, 2, 3} as a subset. The ordering is selected so that the mode-3 antenna selections appear as the 2nd, 3rd, and 4th entries, respectively. This implies that after the interference due to the first antenna in this combination is removed in the first stage of SIC, the remaining SINRs for the other three stages are identical, within a scale factor, to those estimated for modes-3, 2, and 1. Consequently, it is only necessary to estimate the SINR for the first stage of SIC and then map the SINR it to a rate. The rates corresponding to the 2nd, 3rd, and 4th stage are identical, within a scale factor, to those determined for modes-3, 2, and 1. In the example shown in TABLE #1, the "best" combination (i.e., the one with the largest sum rate) is {1, 4, 2, 3} shown in boldface. This "best" antenna combination {1, 4, 2, 3} is the antenna processing order 136 term in the feedback signal 102.

In general, for each mode, it is only necessary to estimate the SINR for the first stage of SIC and map it to a rate. The rates corresponding to the remaining stages are identical, within a scale factor, to the rates determined for the previous modes provided that the same antenna processing order for that mode is followed after the first stage. As a result, it is possible for the base station 106 to derive the rates for all modes based on the feedback of a set of only M rates 134 and one antenna processing order 136. The M rates 134 are those corresponding to the first stage of SIC for modes 1,2,...,M, and the antenna processing order 136 is simply that determined for mode-M using the above selection strategy, e.g., 1-4-2-3 from the example in TABLE #1 where M = N. The antenna processing order 136 serves the dual purpose of specifying both the antenna selection and the antenna processing order for all modes. For mode-n the antenna selection and antenna processing order is simply the last n of M integers of the specified order.

An alternative approach is for the mobile terminal device 104 to feed back the M rates corresponding to the M stages of SIC for mode-M. If the subset property is still used for the antenna selections, then it is possible for the base station 106 to derive the rates for all other modes in the same manner as described above, except with slightly different scale factors.

With M≤N possible modes, the number of required bits in the feedback signal 102 would be:

$$N_b = 5M + \left\lceil \log_2 \left( N! \right) \right\rceil \qquad (4)$$

.

The 5M term is the number of bits required to feedback M rates 134. Since the current HSDPA standard specifies 30 possible Modulation Coding Schemes (MCSs), the number of bits required per rate is 5. As described above, the 5 bits is just an example. The second term is the number of bits required to feedback the antenna processing order 136. N! is simply the number of permutations of the integers 1,2,3,...,N (N!=1x2x3x...N). For example, for a MIMO antenna system with N=4 transmit antennas and M possible modes, the required amount of feedback is $N_b$=25 bits. This is a significant reduction in feedback load compared to the full-feedback approach described earlier with respect to method 200 which required $N_b$=57 bits.

An example of how the mobile terminal device 104 and base station 106 can operate in accordance with method 300 in view of TABLE #1 follows:

- Time 0: N=4, M=3 and K=1, 2 or 3.
- Time 1: Base station selects: K=2 and uses antennas 3 and 2 and the rates assigned to those antennas to send two data streams to the mobile terminal device.

Mobile terminal device feeds back: 3 transmit rates and 4, 2, 3 antenna processing order. • Time 2: Base station selects: K=1 and uses antenna 3 and the rate assigned to that antenna to send one data stream to the mobile terminal device.

Mobile terminal device feeds back: 3 transmit rates and 3, 2, 4antenna processing order.

- Time 3: Base station selects: K=3 and uses antennas 3, 2 and 4 and the rates assigned to those antennas to send three data streams to the mobile terminal device.

Mobile terminal device feeds back: 3 transmit rates and 1, 3, 4 decoding order.

- And so on....

It can be readily appreciated by those skilled in the art that method 300 provides a technique whereby the feedback load for S-PARC applied to HSDPA/WCDMA wireless communications networks may be significantly reduced compared to a full-feedback approach of method 200. The reduction is based on a restriction imposed on the mobile terminal device 104 when it determines the best antenna selections where the selections obey the aforementioned "subset property". By forcing this property, the antenna selections for a given mode (i.e., number of substreams) contain the antenna selections for the previous mode as a subset. As a result, the base station 106 may derive the rates for all modes from one basic set of M rates and an antenna processing order.

An example of a preferred base station 106 that can implement method 300 is described next. In the preferred base station 106 there is a receiver 140 for receiving the feedback signal 102b from the mobile terminal device 104. The base station 106 includes a rate calculator 144 (e.g., processor 110) that processes the feedback signal 102 to derive at least one transmission rate indicator not included in the feedback signal 102b. Then a rate modifier 146 (e.g., processor 110) adjusts the at least one derived transmission rate indicators according to a power allocation or code allocation factor for a signal. Next, a mode selector 148 (e.g., processor 110) selects a transmission mode based on the at least one adjusted transmission rate indicator. Thereafter, an antenna selector 150 selects a subset of active antennas 120-1, 120-2...120-N. Finally, the transmitter 152 transmits a packet data signal 126 using the selected subset of antennas 120-1, 120-2...120-N, the selected transmission mode 121, and the transmission data rates 123-1, 12302...123-K determined for the selected subset of antennas 120-1, 120-2...120-N according to the selected mode 121. It should be appreciated that in the above implementation the following components can also perform the following tasks:

- The rate calculator 144 can derive an encoding order according to the transmission mode(s) from the antenna processing order 136 contained in the feedback signal 102b.
- The rate calculator 144 can calculate the transmission rate indicator(s) according to the antenna processing order 136 contained in the feedback signal 102b.
- The rate modifier 146 can offset the derived transmission rate indicators by a correction term that can depend on any one of the following:

    ■ the correction term depends on an antenna index and a ratio between an instantaneous code allocation factor and a referenced value of the code allocation factor;
    ■ the correction term depends on an antenna index and a ratio between the instantaneous power allocation factor and a referenced value of the power allocation factor; or
    ■ the correction term depends on an antenna index, a ratio between an instantaneous code allocation factor and a referenced value of the code allocation factor, and a ratio between an instantaneous power allocation factor and a referenced value of the power allocation factor;

- The rate modifier 146 can modify the derived transmission rate indicators according to the amount of data bits buffered in a queue.
- The mode selector 148 can select a transmission mode based on a summed data rate of each mode.
- The mode selector 148 selects the lowest transmission mode among the transmission mode(s) which give the highest summed data rate.
- The transmitter 152 includes a transmit power calculator that determines the transmit power for each antenna 120-1, 120-2...120-N based on the transmission data rates determined for the selected antennas according to the selected mode.
- The antenna selector 150 can select transmission antennas 120-1, 120-2...120-N based on the antenna processing order 136 contained in the feedback signal 102b.
- The packet data signal 126 includes a number of data substreams 124-1, 124-2...124-K and includes a feed-forward signaling about the composition of the data substreams 124-1, 124-2...124-K.

An additional benefit of the present invention is that since the search for best antenna selections is sequential, the search space is smaller than for an exhaustive search. Consequently, the number of SINRs, and thus rates, that the mobile terminal device 104 needs to estimate for each mode is significantly reduced. From the example associated with TABLE #1, the mobile terminal device 104 need only consider 10 different antenna combinations and compute one SINR for each combination. This is compared to the exhaustive search associated with method 200 which considers the full 15 antenna combinations, and one or more SINR computations for each combination.

In addition, by using the sequential search strategy to determine the best antenna selections, the resulting antenna processing order 136 ensures that the SINRs are ordered from lowest to highest, e.g., for mode-4 from TABLE #1, the substream with the lowest SINR (SINR 1) is decoded first, and that with the highest SINR (SINR 3) is decoded last. This ordering enables the following three embodiments.

In the first embodiment, the antenna processing order 136 may be exploited to further reduce the number of bits in the feedback signal 102. FIGURE 4 is a block diagram that illustrates how this reduction is achieved using the antenna processing order 1-4-2-3 found in the example associated with TABLE #1. The diagram illustrates the 30 possible MCS rates in the existing 3GPP standard and the corresponding ordered SINRs determined by the mobile terminal device 104. Without exploiting the ordering, the four rates together would require 20 bits of feedback ($\{log_2 30\}$ = 5 bits for each rate). However, because of the antenna processing ordering, the range of possible values for each successive SINR in the ordering 1-4-2-3 is reduced. As shown in FIGURE 4, SINR 1 covers a larger range of MCS levels than SINR 4 which in turn has a larger range of MCS levels than SINR 2 as so on. Consequently, it is not necessary to employ 5 bits to feedback each of the N-transmit rates 134. Fewer bits may be used for the rates of later stages, thus reducing the overall number of bits in the feedback signal 102. For example, SINR 1 (1-transmit rate 134) could require 5 bits, SINR 4 (4-transmit rate 134) could require 4 bits, SINR 2 (2-transmit rate 134) could 3 bits and SINR 3 (3-transmit rate 134) could require 2 bits.

In one example, the antenna processing order 136 is exploited in yet another way to provide higher rate MCS combinations so the mobile terminal device 104 and the base station 106 can avoid a possible MCS limitation problem. In this example, 5 bits are still used to feedback each of the M transmission rates 134, but since the later stage SINRs are always greater than earlier stages, the 5 bits can be allowed to cover a different range of MCS rates. As shown in FIGURE 5, the later stage rates extend the MCS table significantly beyond those of the existing 30 rates in the 3GPP standard. For example, SINR 3 is very high so antenna 3 could transmit at a higher rate than the standard 30 rates.

In another example, the antenna processing order 136 is exploited in still yet another way to enhance the feed forward signaling from the base station 106 to the mobile terminal device 104. In the past, the base station 106 would notify the mobile terminal device 104 about the exact composition of the signals to be sent which includes the number of streams and the corresponding modulation size for each stream. For the example of 4 transmit antennas, 2 bits would be needed to signal the number of streams and an additional 4 bits to indicate whether QPSK (Quadrature Phase Shifting Keying) or 16QAM (Quadrature Amplitude Modulation) is used for each stream. Hence, a total of 6 bits are required. Since, the subset property (antenna processing order 136) associated with method 300 ensures that the SINR for streams to be decoded later cannot decrease, a more efficient joint encoding of the two aforementioned information fields can be devised. This is illustrated in FIGURE 6 where as shown:

- First, start with the choice for the first stream, where either QPSK or 16QAM can be used.
- Next, for the second stream, three choices are possible: QPSK, 16QAM or no more streams. However, because of the subset property (antenna processing order 136) the availability of these choices depends what is chosen for the first stream:

  ■ If QPSK is chosen for the first stream, any of the three choices can be made for the second stream.
  ■ If 16QAM is chosen for the first stream, then the second stream cannot use QPSK. Hence, only the choices of 16QAM or no more streams are available.

- Similar logic can be applied to the third and fourth streams.
- By enumerating all of these possibilities, it can be seen that there are only 14 valid cases. Therefore, 4 bits suffices to encode both information fields.

Following are some additional features, advantages and uses of the present invention:

- The present invention provides a simple and elegant way of introducing the S-PARC scheme into the HSDPA standard without causing an excessive increase in CQI feedback load.

- Even with the reduced amount of feedback in method 300 compared to a full-feedback approach of method 200, the base station can still derive the rates and antenna selections for all possible modes. Consequently, the base station may still maintain control over the actual number of transmitted data substreams. This is in line with the current philosophy of HSDPA where the base station maintains control over the transmitted data rate based on its inherent knowledge of power and code allocations as well as available data in queue.

- There is a minimal degradation in performance by using the reduced feedback approach of method 300 compared to the full-feedback approach of method 200.

- There is a less complex search for the best antenna selections using the reduced feedback approach of method 300 compared to the full-feedback approach of method 200.

- The traditional PARC technique is described in detail in an article by Seong Taek Chung et al. entitled "Approaching Eigenmode BLAST Channel Capacity Using V-BLAST with Rate and Power Feedback" Proc. IEEE VTC'02-Fall Atlantic City, NJ, Oct. 2001.

- Even though the wireless communications network is described herein as being a third generation cellular system that implements the HSDPA provision of the WCDMA standard, it should be appreciated that the wireless communications network could implement other standards besides the HSDPA/WCDMA standard.

Although several embodiments of the present invention have been illustrated in the accompanying Drawings and described in the foregoing Detailed Description, it should be understood that the invention is not limited to the embodiments disclosed, but is capable of numerous rearrangements, modifications and substitutions without departing from the scope of the invention as set forth and defined by the following claims.

**Claims**

1. A mobile terminal device (104) comprising:

   a receiver (130) for receiving a signal from each of N transmit antennas (120-1, 120-2, 120-N) associated with a base station (106);
   a processor (131) for generating a reduced feedback signal (102b) for M transmission modes in response to receiving the signals from the N transmit antennas, said reduced feedback signal for M transmission modes includes:

   M transmission rate indicators (124); and
   an antenna processing order (136) which indicates the order that could be used for detecting the signals (126) corresponding to each of the M transmission modes; and
   a transmitter (138) for transmitting the reduced feedback signal to the base station, said mobile terminal device **characterized by**:

   said processor being adapted to determine the antenna processing order by determining an antenna selection that supports for each of the M transmission modes the largest sum transmission rate of an input bit stream demultiplexed and encoded at the base station into K substreams, wherein K is equal to or less than N,
   the feedback signal indicating for each mode when processed at the base station, a mode signal that determines the number K of substreams, at least one rate indicator (123-1, 123-2, 123-K) for determining the rate of each substream and a best antenna selection signal for selecting one or more antennas from the N antennas for transmitting the K substreams.

2. The mobile terminal device of Claim 1, wherein said processor determines each of the M transmission rate indicators by determining a signal-to-interference-plus-noise ratio, SINR, of a signal transmitted by each of the N transmit antennas.

3. The mobile terminal device of Claim 1, wherein said M transmission rate indicators are transmission rates.

4. The mobile terminal device of Claim 1, wherein said M transmission rate indicators are signal-to-interference-plus-noise ratios.

5. The mobile terminal device of Claim 1, wherein said M transmission rate indicators are indices to a table representing possible modulation and coding combinations.

**6.** The mobile terminal device of Claim 1, wherein the number of said transmission modes M is less than the number of transmit antennas N.

**7.** The mobile terminal device of Claim 1, wherein the antenna processing order obey the subset property if, for all n=2, 3,...N, the antenna selection for the mode-n-1 is a subset of the antenna selection of mode-n.

**8.** The mobile terminal device of Claim 7, wherein said processor utilizes the antenna processing order to reduce the number of bits required to identify the M transmission rate indicators in the reduced feedback signal.

**9.** The mobile terminal device of Claim 7, wherein the said processor utilizes the antenna processing order to enable the use of higher rate modulation and coding combinations.

**10.** The mobile terminal device of Claim 7, wherein said processor determines each of the M transmission rate indicators by determining a first stage SINR of a signal transmitted by each of the N transmit antennas.

**11.** The mobile terminal device of Claim 10, wherein said M transmission rate indicators are transmission rates.

**12.** The mobile terminal device of Claim 10, wherein said M transmission rate indicators are first stage SINRs.

**13.** The mobile terminal device of Claim 10, wherein said M transmission rate indicators are indices to a table representing possible modulation and coding combinations.

**14.** A base station (106) comprising:

a receiver (140) for receiving a feedback signal (102b) from a mobile terminal device (104), wherein said feedback signal comprises a plurality of M transmission rate indicators corresponding to M transmission modes and an antenna processing order,
the base station **characterised by** the antenna processing order being determined by an antenna selection that supports for each of the M transmission modes the largest sum transmission rate of an input bit stream at the base station,
a rate calculator (144) for processing the feedback signal to derive for each mode at least one transmission rate indicator (123-1, 123-2, 123-K) not included in the feedback signal;
a rate modifier (146) for adjusting for each mode the at least one derived transmission rate indicator according to a power allocation or code allocation factor for a packet data signal;
a mode selector (148) for selecting a transmission mode (121) based on the at least one adjusted transmission rate indicator of each mode;
an antenna selector (155) for selecting a set of active antennas (120-1, 120-2, 120-N) based on the antenna processing order contained in the feedback signal; and
a transmitter (152) for transmitting the packet data signal (126) using the selected set of antennas, the selected transmission mode, and the transmission data rates determined for the selected antennas according to the selected mode, whereby the transmitter (152) transmits the packet data signal (126) by having an input bit stream (122) demultiplexed into one or more substreams (124-1, 124-2, 124-N), the number of substreams K depends on the selected transmission mode (121), each substream is encoded, the rate of each substream depends on the derived at least one transmission data rate indicator (123-1, 123-2, 123-K), the coded substreams are transmitted by the selected set of active antennas selected from the N transmit antenna s depending on a best antenna selection signal (125), whereby K is equal or less than N, whereby (121) the best antenna selection signal (125) is determined by processing the feedback signal.

**15.** The base station of Claim 14, wherein said rate calculator derives an encoding order according to the at least one transmission mode from the antenna processing order contained in the feedback signal.

**16.** The base station of Claim 14, wherein said rate modifier offsets the derived transmission rate indicators by a correction term.

**17.** The base station of Claim 16, wherein said correction term depends on an antenna index and a ratio between an instantaneous code allocation factor and a referenced value of the code allocation factor.

**18.** The base station of Claim 16, wherein said correction term depends on an antenna index and a ratio between the instantaneous power allocation factor and a referenced value of the power allocation factor.

19. The base station of Claim 16, wherein said correction term depends on an antenna index, a ratio between an instantaneous code allocation factor and a referenced value of the code allocation factor, and a ratio between an instantaneous power allocation factor and a referenced value of the power allocation factor.

20. The base station of Claim 14, wherein said rate modifier utilizes a scaling operation to account for fluctuations in the power and code allocation factors.

21. The base station of Claim 14, wherein said mode selector selects the transmission mode based on a summed data rate of each mode.

22. The base station of Claim 21, wherein said mode selector selects the lowest transmission mode among the transmission mode/s which give the highest summed data rate.

23. The base station of Claim 21, wherein said transmitter comprises a transmit power calculator that determines the transmit power for each antenna based on the transmission data rates determined for the selected antennas according to the selected mode.

24. The base station of Claim 14, wherein said packet data signal includes a feed-forward signaling about the composition of the data substreams.

25. The base station of Claim 14, wherein said transmitter utilizes the antenna processing order to reduce the number of bits in feed-forward signaling.

26. The base station of Claim 14, wherein said rate modifier further modifies the derived at least one transmission rate indicator according to the amount of data bits buffered in a queue.

27. A network (100) comprising:

   at least one mobile terminal device (104); and
   at least one base station (106) according to any one of the claims 14 to 26.

28. The network of Claim 27, wherein said transmit antennas can be co-located at the same base station site or at different base station sites.

29. The network of Claim 27, wherein each mobile terminal device includes:

   a receiver (130) for receiving a signal from each of the N transmit antennas;
   a processor (131) for generating the reduced feedback signal for M transmission modes in response to receiving the signals from the N transmit antennas, said reduced feedback signal for M transmission modes includes:

      the M transmission rate indicators; and
      the antenna processing order which indicates the order that could be used for detecting the signals (126) corresponding to each of the M transmission modes; and
      a transmitter (138) for transmitting the reduced feedback signal.

30. The network of Claim 27, wherein each base station includes:

   a receiver (140) for receiving the reduced feedback signal from said at least one mobile terminal device;
   a rate calculator (144) for processing the reduced feedback signal to derive at least one transmission rate indicator (123-1, 123-2, 123-N) not included in the feedback signal;
   a rate modifier (146) for adjusting the at least one derived transmission rate indicators according to a power allocation or code allocation factor for a signal;
   a mode selector (148) for selecting a transmission mode based on the at least one adjusted transmission rate indicator;
   an antenna selector (150) for selecting a set of active antennas; and
   a transmitter (152) for transmitting [[a]] the packet data signal (126) using the selected set of antennas, the selected transmission mode, and the transmission data rates determined for the selected antennas according to the selected mode.

31. A method (300) for implementing a Selective-Per-Antenna-Rate-Control, S-PARC, technique in a wireless communications network (100), said method comprising the steps of:

transmitting (302) a signal from each of N-transmit antennas (120-1, 120-2, 120-N) in a base station (106) to a mobile terminal device (104);
generating (304), in said mobile terminal device, a reduced feedback signal (102b) in response to receiving the signals, said reduced feedback signal for M transmission modes includes:

M-transmission rate indicators (124); and
an antenna processing order (136) which indicates the order that could be used for detecting the signals corresponding to each of the M transmission modes; and

transmitting (306), from said mobile terminal device, the reduced feedback signal to the base station; and
processing (308), in said base station, the reduced feedback signal to determine which mode and transmission rate/s are actually going to be used to transmit data substream/s (124-1, 124-2, 124-N) from selected transmit antenna/s to said mobile terminal device, said method further **characterized by**:

said mobile station determining the antenna processing order by determining an antenna selection that supports for each of the M transmission modes the largest sum transmission rate of an input bit stream demultiplexed and encoded at the base station into K substreams, wherein K is equal to or less than N, the feedback signal indicating for each mode when processed at the base station, a mode signal that determines the number K of substreams, at least one rate indicator (123-1, 123-2, 123-K) for determining the rate of each substream and a best antenna selection signal for selecting one or more antennas from the N antennas for transmitting the K substreams.

32. The method of Claim 31, wherein said base station in determining which mode and transmission rate/s are actually going to be used to transmit data substream/s to said mobile terminal device also determines transmission rates for all of the modes.

33. The method of Claim 32, wherein said base station uses the M-transmit rates in addition to transmit power, available number of codes and available data in queue to determine which mode and transmission rate/s are actually going to be used to transmit N-data substream/s to said mobile terminal device.

34. The method of Claim 32, wherein said mobile terminal device determines each M-transmit rate by determining a signal-to-interference-plus-noise ratio, SINR, of a signal transmitted by each N-transmit antenna.

35. The method of Claim 32, wherein said mobile terminal device determines said antenna processing order by obeying a subset property if, for all n=2, 3,...N, where the antenna selection for the mode-(n-1) is a subset of the antenna selection for the mode-n.

36. The method of Claim 32, wherein said mobile terminal device uses at most M+1 words to generate the reduced feedback signal, where
the first M words contain the bits required to identify the M-transmit rates in the reduced feedback signal; and
the last word contains the bits required to identify the antenna processing order in the reduced feedback signal.

37. The method of Claim 36, wherein said mobile terminal device utilizes the antenna processing order to further reduce the number of bits required to identify the M-transmit rates in the reduced feedback signal.

38. The method of Claim 36, wherein said mobile terminal device utilizes the antenna processing order to enable the use of a higher rate modulation coding scheme, MCS, rate so as to avoid a MCS limitation.

39. The method of Claim 36, wherein said base station utilizes the antenna processing order to reduce the number of bits in feed-forward signaling required to notify the mobile terminal device of a composition of the data substream/s to be sent to the mobile terminal device.

**40.** The method of Claim 31, wherein said mobile terminal device is configured to use a High-Speed-Downlink-Packet-Access, HSPDA, provision of a Wideband Code Division Multiple Access, WCDMA, standard.

**Patentansprüche**

**1.** Mobilendgeräteinrichtung (104), umfassend:

einen Empfänger (130) zum Empfangen eines Signals von jeder von N Übertragungsantennen (120-1, 120-2, 120-N), die mit einer Basisstation (106) assoziiert sind;
einen Prozessor (131) zum Erzeugen eines verringerten Feedback-Signals (102b) für M Übertragungsmodi in Antwort auf ein Empfangen der Signale von den N-Übertragungsantennen, wobei das verringerte Feedback-Signal für M Übertragungsmodi beinhaltet:

M Übertragungsratenindikatoren (124); und
Eine Antennenverarbeitungsreihenfolge (136), welche die Reihenfolge anzeigt, welche verwendet werden kann zum Erfassen der Signale (126) entsprechend jeder der M Übertragungsmodi; und
Einen Übertrager (138) zum Übertragen des verringerten Feedback-Signals zu der Basisstation, wobei die Mobilendgeräteinrichtung **dadurch gekennzeichnet ist, dass**:

der Prozessor eingerichtet ist, um die Antennenverarbeitungsreihenfolge zu bestimmen durch Bestimmen einer Antennenauswahl, welche für jeden der M Übertragungsmodi die größte Summenübertragungsrate eines Eingangsbitstroms unterstützt, der gedemultiplext und encodiert wurde an der Basisstation in K Teilströme, wobei K gleich oder kleiner als N ist,
das Feedback-Signal für jeden Modus, wenn dieser an der Basisstation verarbeitet wurde, ein Modussignal, welches die Zahl K von Teilströmen bestimmt, mindestens einen Ratenindikator (123-1, 123-2, 123-K) zum Bestimmen der Rate von jedem Teilstrom und ein Beste-Antenne-Auswahlsignal zum Auswählen einer oder mehrerer Antennen aus den N Antennen zum Übertragen der K Teilströme anzeigt.

**2.** Mobilendgeräteinrichtung nach Anspruch 1, wobei der Prozessor jeden der M Übertragungsratenindikatoren bestimmt durch Bestimmen eines Signal-zu-Interferenz plus-Rausch-Verhältnisses, SINR, eines Signals, das von jeder der N Übertragungsantennen übertragen wurde.

**3.** Mobilendgeräteinrichtung nach Anspruch 1, wobei die M Übertragungsratenindikatoren Übertragungsraten sind.

**4.** Mobilendgeräteinrichtung nach Anspruch 1, wobei die M Übertragungsratenindikatoren Signal-zu-Interferenz plus Rausch-Verhältnisse sind.

**5.** Mobilendgeräteinrichtung nach Anspruch 1, wobei die M Übertragungsratenindikatoren Indizes zu einer Tabelle sind, welche mögliche Modulations- und Codierkombinationen repräsentiert.

**6.** Mobilendgeräteinrichtung nach Anspruch 1, wobei die Zahl der Übertragungsmodi M kleiner ist als die Zahl von Übertragungsantennen N.

**7.** Mobilendgeräteinrichtung nach Anspruch 1, wobei die Antennenverarbeitungsreihenfolge die Teilmengeneigenschaft befolgen, wenn, für alle n = 2, 3 ... N die Antennenauswahl für den Modus-N-1 eine Teilmenge der Antennenauswahl des Modus N ist.

**8.** Mobilendgeräteinrichtung nach Anspruch 7, wobei der Prozessor die Antennenverarbeitungsreihenfolge verwendet, um die Zahl von Bits zu reduzieren, die benötigt wird, um die M Übertragungsratenindikatoren in dem verringerten Feedback-Signal zu identifizieren.

**9.** Mobilendgeräteinrichtung nach Anspruch 7, wobei der Prozessor die Antennenverarbeitungsreihenfolge verwendet, um die Verwendung einer höheren Ratenmodulation und Codierkombinationen zu ermöglichen.

**10.** Mobilendgeräteinrichtung nach Anspruch 7, wobei der Prozessor jede der M Übertragungsratenindikatoren bestimmt durch Bestimmen eines Erste-Stufe-SINR eines Signals, das durch jede der N Übertragungsantennen übertragen wurde.

**11.** Mobilendgeräteinrichtung nach Anspruch 10, wobei die M Übertragungsratenindikatoren Übertragungsraten sind.

**12.** Mobilendgeräteinrichtung nach Anspruch 10, wobei die M Übertragungsratenindikatoren Erste-Stufe-SINRs sind.

**13.** Mobilendgeräteinrichtung nach Anspruch 10, wobei die M Übertragungsratenindikatoren Indizes zu einer Tabelle sind, welche mögliche Modulation und Codierkombinationen repräsentieren.

**14.** Basisstation (106), umfassend:

einen Empfänger (140) zum Empfangen eines Feedback-Signals (102b) von einer Mobilendgeräteinrichtung (104), wobei das Feedback-Signal eine Vielzahl von M Übertragungsratenindikatoren entsprechend M Übertragungsmodi und eine Antennenverarbeitungsreihenfolge umfasst, wobei die Basisstation **dadurch gekennzeichnet ist, dass**
die Antennenverarbeitungsreihenfolge durch eine Antennenauswahl bestimmt wird, welche für jede der M Übertragungsmodi die größte Summenübertragungsrate eins Eingangsbitstroms an der Basisstation unterstützt,
einen Ratenberechner (144) zum Verarbeiten des Feedback-Signals, um für jeden Modus mindestens einen Übertragungsratenindikator (123-1, 123-2, 123-K), welcher nicht in dem Feedback-Signal beinhaltet ist, abzuleiten;
einen Ratenmodifizierer (146) zum Anpassen, für jeden Modus, des mindestens einen abgeleiteten Übertragungsratenindikators entsprechend einer Leistungszuweisung oder Code-Zuweisungsfaktor für ein Paketdatensignal;
einen Modusauswähler (148) zum Auswählen eines Übertragungsmodus (121), basierend auf dem mindestens einen angepassten Übertragungsratenindikator von jedem Modus;
einen Antennenauswähler (155) zum Auswählen eines Satzes von aktiven Antennen (120-1, 120-2, 120-N) basierend auf der Antennenverarbeitungsreihenfolge, die in dem Feedback-Signal enthalten ist; und
einen Übertrager (152) zum Übertragen des Paketdatensignals (126) unter Verwendung des ausgewählten Satzes von Antennen, des ausgewählten Übertragungsmodus, und den Übertragungsdatenraten, die für die ausgewählten Antenne entsprechend dem ausgewählten Modus bestimmt wurden, wodurch der Übertrager (152) das Paketdatensignal (126) überträgt durch demultiplext haben eines Eingangsbitstroms (122) in einen oder mehrere Teilströme (124-1, 124-2, 124-N), wobei die Zahl von Teilströmen K von dem ausgewählten Übertragungsmodus (121) abhängt, jeder Teilstrom encodiert wird, die Rate von jedem Teilstrom von dem mindestens einen Übertragungsdatenratenindikator (123-1, 123-2, 123-K) abhängt, die codierten Teilströme durch den ausgewählten Satz von aktiven Antennen übertragen werden, die aus den N Übertragungsantennen abhängig von einem Beste-Antenne-Auswahlsignal (125) ausgewählt wurden, wodurch K gleich oder kleiner als N ist, wodurch das Beste-Antenne-Auswahlsignal (125) durch Bearbeiten des Feedback-Signals bestimmt wird.

**15.** Basisstation nach Anspruch 14, wobei der Ratenberechner eine Encodier-Reihenfolge ableitet entsprechend dem mindestens einen Übertragungsmodus aus der Antennenverarbeitungsreihenfolge, die in dem Feedback-Signal enthalten ist.

**16.** Basisstation nach Anspruch 14, wobei der Ratenmodifizierer die abgeleiteten Übertragungsratenindikatoren um einen Korrekturterm absetzt.

**17.** Basisstation nach Anspruch 16, wobei der Korrekturterm von einem Antennenindex und einem Verhältnis zwischen einem Momentancode-Zuweisungsfaktor und einem Referenzwert des Code-Zuweisungsfaktors abhängt.

**18.** Basisstation nach Anspruch 16, wobei der Korrekturterm von einem Antennenindex unter einem Verhältnis zwischen dem Momentan-Leistungszuweisungsfaktor und einem Referenzwert des Leistungszuweisungsfaktors abhängt.

**19.** Basisstation nach Anspruch 16, wobei der Korrekturterm von einem Antennenindex, einem Verhältnis zwischen einem Momentancode-Zuweisungsfaktor und einem Referenzwert des Code-Zuweisungsfaktors, und einem Verhältnis zwischen einem Momentanleistungszuweisungsfaktor und einem Referenzwert des Leistungszuweisungsfaktors abhängt.

**20.** Basisstation nach Anspruch 14, wobei der Ratenmodifizierer eine Skalierungsoperation verwendet, um Fluktuationen in den Leistungs- und Code-Zuweisungsfaktoren zu berücksichtigen.

21. Basisstation nach Anspruch 14, wobei der Modusauswähler der Übertragungsmodus basierend auf einer summierten Datenrate jedes Modus auswählt.

22. Basisstation nach Anspruch 21, wobei der Modusselektor den geringsten Übertragungsmodus unter den Übertragungsmodi auswählt, welche die höchste summierte Datenrate geben.

23. Basisstation nach Anspruch 21, wobei der Übertrager einen Übertragungsleistungsberechner umfasst, welcher die Übertragungsleistung für jede Antenne bestimmt basierend auf den Übertragungsdatenraten, welche für die ausgewählten Antennen entsprechend dem ausgewählten Modus bestimmt wurden.

24. Basisstation nach Anspruch 14, wobei das Paketdatensignal eine Feed-Forward-Signalisierung über die Zusammensetzung der Datenteilströme beinhaltet.

25. Basisstation nach Anspruch 14, wobei der Übertrager die Antennenverarbeitungsreihenfolge verwendet, um die Zahl von Bits in Feed-Forward-Signalisierung zu reduzieren.

26. Basisstation nach Anspruch 14, wobei der Ratenmodifizierer ferner den abgeleiteten mindestens einen Übertragungsratenindikator modifiziert entsprechend der Menge von Datenbits, die in einer Warteschlagen gepuffert sind.

27. Netz (100), umfassend:

mindestens eine Mobilendgeräteinrichtung (104) ; und
mindestens eine Basisstation (106) nach einem der Ansprüche 14 bis 26.

28. Netz nach Anspruch 27, wobei die Übertragungsantennen zusammen an derselben Basisstationslage angeordnet sein können oder an verschiedenen Basisstationslage.

29. Netz nach Anspruch 27, wobei jede Mobilendgeräteinrichtung beinhaltet:

einen Empfänger (130) zum Empfangen eines Signals von jeder der N Übertragungsantennen;
einen Prozessor (131) zum Erzeugen des verringerten Feedback-Signals für N Übertragungsmodi in Antwort auf ein Empfangen der Signale von den N Übertragungsantennen, wobei die verringerten Feedback-Signale für M Übertragungsmodi beinhalten:

die N Übertragungsraten-Indikatoren, und
die Antennenverarbeitungsreihenfolge, welche die Reihenfolge anzeigt, welche zum Erfassen der Signale (126) entsprechend jedem der M Übertragungsmodi verwendet werden kann; und
einen Übertrager (138) zum Übertragen des verringerten Feedback-Signals.

30. Netz nach Anspruch 27, wobei jede Basisstation beinhaltet:

einen Empfänger (140) zum Empfangen des verringerten Feedback-Signals von der mindestens einen Mobilendgeräteinrichtung;
einen Ratenberechner (144) zum Verarbeiten des verringerten Feedback-Signals, um mindestens einen Übertragungsratenindikator (122-1, 123-2, 123-N) abzuleiten, der nicht in dem Feedback-Signal beinhaltet ist;
einen Raten-Modifizierer (146) zum Anpassen der mindestens einen abgeleiteten Übertragungsratenindikatoren entsprechend einem Leistungszuweisungs- oder Code-Zuweisungsfaktor für ein Signal;
einen Modusauswähler (148) zum Auswählen eines Übertragungsmodus basierend auf dem mindestens einen angepassten Übertragungsratenindikator;
einen Antennenauswähler (150) zum Auswählen eines Satzes von aktiven Antennen; und
einen Übertrager (152) zum Übertragen [a] des Paketdatensignals (126) unter Verwendung des ausgewählten Satzes von Antennen, des ausgewählten Übertragungsmodus, und der Übertragungsdatenraten, die für die ausgewählten Antennen entsprechend den ausgewählten Modi bestimmt wurden.

31. Verfahren (300) zum Implementieren einer Selektiv-pro-Antennen-Raten-Steuerungs-, S-PARC-, Technik in einem Drahtlos-Kommunikationsnetz (100), wobei das Verfahren die Schritte umfasst:

Übertragen (103) eines Signals von jeder von N Übertragungsantennen (120-1, 120-2, 120-N) in einer Basisstation (106) zu einer Mobilendgeräteinrichtung (104);

Erzeugen (304), in der Mobilendgeräteinrichtung, eines verringerten Feedback-Signals (102b) in Antwort auf ein Empfangen der Signale, wobei das reduzierte Feedback-Signal für M Übertragungsmodi beinhaltet:

M-Übertragungsratenindikatoren (124); und

eine Antennenübertragungsreihenfolge (136), welche die Reihenfolge anzeigt, die zum Bestimmen der Signale entsprechend jeder der M Übertragungsmodi verwendet werden kann; und

Übertragen (306), von der Mobilendgeräteinrichtung, des verringerten Feedback-Signals zu der Basisstation; und

Verarbeiten (308), in der Basisstation, des verringerten Feedback-Signals, um zu bestimmen, welcher Modus und Übertragungsrate tatsächlich verwendet werden, um Datenteilströme (124-1, 124-2, 124-N) von ausgewählten Übertragungsantennen zu der Mobilendgeräteinrichtung zu übertragen, wobei das Verfahren ferner **dadurch gekennzeichnet ist, dass**:

die Mobilstation die Antennenverarbeitungsreihenfolge bestimmt durch Bestimmen einer Antennenauswahl, welche für jede der M Übertragungsmodi die größte Summenübertragungsrate eines Eingangsbitstroms unterstützt, welcher an der Basisstation in K Teilströme gedemultiplext und encodiert wurde, wobei K gleich oder kleiner als N ist,

das Feedback-Signal für jeden Modus, bei Verarbeitung an der Basisstation, ein Modussignal anzeigt, welcher die Zahl K von Teilströmen, mindestens einen Ratenindikator (123-1, 123-2, 123-K) zum Bestimmen der Rate jedes Teilstroms und ein Beste-Antennenauswahlsignal zum Auswählen einer oder mehrerer Antennen aus den N Antennen zum Übertragen der K Teilströme anzeigt.

32. Verfahren nach Anspruch 31, wobei die Basisstation beim Bestimmen, welcher Modus und Übertragungsrate/-raten tatsächlich verwendet werden, um einen Datenteilstrom bzw. -teilströme zu der Mobilstationseinrichtung zu übertragen, auch Übertragungsraten für alle der Modi bestimmt.

33. Verfahren nach Anspruch 32, wobei die Basisstation die M-Übertragungsraten zusätzlich zu Übertragungsleistung, verfügbare Zahl von Codes und verfügbarer Daten in einer Warteschlange verwendet, um zu bestimmen, welcher Modus und welche Übertragungsrate/-raten tatsächlich verwendet werden, um einen N-Datenteilstrom/-teilströme zu der Mobilendgeräteinrichtung zu übertragen.

34. Verfahren nach Anspruch 32, wobei die Mobilstationseinrichtung jede M-Übertragungsrate bestimmt durch Bestimmen eines Signal-zu-Interferenz plus-Rausch-Verhältnisses, SINR, eines Signals, das von jeder N Übertragungsantenne übertragen wurde.

35. Verfahren nach Anspruch 32, wobei die Mobilendgeräteinrichtung die Antennenverarbeitungsreihenfolge bestimmt durch Befolgen einer Teilmengeneigenschaft, wenn, für alle (n=2, 3, ... N), die Antennenauswahl für den Modus-n-1 eine Teilmenge der Antennenauswahl für den Modus-n ist.

36. Verfahren nach Anspruch 32, wobei die Mobilendgeräteinrichtung höchstens M+1 Worte verwendet, um das verringerte Feedback-Signal zu erzeugen, wobei

die ersten M Worte, die Blitz beinhalten, welche benötigt werden, um die M Übertragungsraten in dem verringerten Feedback-Signal zu identifizieren; und

das letzte Wort die Bits beinhaltet, die benötigt werden, um die Antennenverarbeitungsreihenfolge in dem verringerten Feedback-Signal zu identifizieren.

37. Verfahren nach Anspruch 36, wobei die Mobilendgeräteinrichtung die Antennenverarbeitungsreihenfolge verwendet, um die Zahl von Bits weiter zu reduzieren, die benötigt werden, um die M Übertragungsraten in dem verringerten Feedback-Signal zu identifizieren.

38. Verfahren nach Anspruch 36, wobei die Mobilendgeräteinrichtung die Antennenverarbeitungsreihenfolge verwendet, um die Verwendung einer höheren Ratenmodulations-Codierschema-, MCS-, Rate, zu ermöglichen, um eine MSC-Begrenzung zu vermeiden.

39. Verfahren nach Anspruch 36, wobei die Basisstation die Antennenverarbeitungsreihenfolge verwendet, um die Zahl von Bits in Feed-Forward-Signalisierung zu reduzieren, die benötigt werden, um die Mobilendgeräteinrichtung über eine Zusammensetzung des Datenteilstroms/der Datenteilströme, die zu der Mobilendgeräteinrichtung zu senden sind, zu benachrichtigen.

**40.** Verfahren nach Anspruch 31, wobei die Mobilendgeräteinrichtung konfiguriert ist, um eine High-Speed-Downlink-Packet-Access-, HSDPA-, Bereitstellung eines Wideband-Code-Division-Multiple-Access-, WCDMA-, Standards zu verwenden.

**Revendications**

**1.** Dispositif formant terminal mobile (104) comprenant :

un récepteur (130) pour recevoir un signal en provenance de chacune de N antennes d'émission (120-1, 120-2, 120-N) associée à une station de base (106) ;
un processeur (131) pour produire un signal de rétroaction réduit (102b) pour M modes d'émission en réponse à la réception des signaux en provenance des N antennes d'émission, ledit signal de rétroaction réduit pour M modes d'émission inclut :

M indicateurs de débit d'émission (124) ; et
un ordre de traitement d'antenne (136) qui indique l'ordre qui pourrait être utilisé pour détecter les signaux (126) correspondant à chacun des M modes d'émission ; et
un émetteur (138) pour émettre le signal de rétroaction réduit à la station de base, ledit dispositif formant terminal mobile étant **caractérisé par** :

ledit processeur étant conçu pour déterminer l'ordre de traitement d'antenne en déterminant une sélection d'antenne qui supporte pour chacun des M modes d'émission le débit d'émission de somme le plus grand d'un flot de bits d'entrée démultiplexé et codé au niveau de la station de base en K flots secondaires, dans lequel K est égal ou inférieur à N,
le signal de rétroaction indiquant pour chaque mode quand il est traité au niveau de la station de base, un signal de mode qui détermine le nombre K de flots secondaires, au moins un indicateur de débit (123-1, 123-2, 123-K) pour déterminer le débit de chaque flot secondaire et un signal de sélection de meilleure antenne pour sélectionner une ou plusieurs antennes à partir des N antennes pour émettre les K flots secondaires.

**2.** Dispositif formant terminal mobile selon la revendication 1, dans lequel ledit processeur détermine chacun des M indicateurs de débit d'émission en déterminant un rapport signal sur interférence plus bruit, SINR, d'un signal émis par chacune des N antennes d'émission.

**3.** Dispositif formant terminal mobile selon la revendication 1, dans lequel lesdits M indicateurs de débit d'émission sont des débits d'émission.

**4.** Dispositif formant terminal mobile selon la revendication 1, dans lequel lesdits M indicateurs de débit d'émission sont des rapports signal sur interférence plus bruit.

**5.** Dispositif formant terminal mobile selon la revendication 1, dans lequel lesdits M indicateurs de débit d'émission sont des indices vers une table représentant des combinaisons de modulation et de codage possibles.

**6.** Dispositif formant terminal mobile selon la revendication 1, dans lequel le nombre desdits modes d'émission M est inférieur au nombre d'antennes d'émission N.

**7.** Dispositif formant terminal mobile selon la revendication 1, dans lequel l'ordre de traitement d'antenne obéit à la propriété de sous-ensemble si, pour tous les n = 2, 3, ..., N, la sélection d'antenne pour le mode-n-1 est un sous-ensemble de la sélection d'antenne de mode-n.

**8.** Dispositif formant terminal mobile selon la revendication 7, dans lequel ledit processeur utilise l'ordre de traitement d'antenne pour réduire le nombre de bits nécessaires pour identifier les M indicateurs de débit d'émission dans le signal de rétroaction réduit.

9. Dispositif formant terminal mobile selon la revendication 7, dans lequel ledit processeur utilise l'ordre de traitement d'antenne pour permettre l'utilisation de combinaisons de modulation et de codage de débit plus élevé.

10. Dispositif formant terminal mobile selon la revendication 7, dans lequel ledit processeur détermine chacun des M indicateurs de débit d'émission en déterminant un SINR de premier étage d'un signal émis par chacune des N antennes d'émission.

11. Dispositif formant terminal mobile selon la revendication 10, dans lequel lesdits M indicateurs de débit d'émission sont des débits d'émission.

12. Dispositif formant terminal mobile selon la revendication 10, dans lequel lesdits M indicateurs de débit d'émission sont des SINR de premier étage.

13. Dispositif formant terminal mobile selon la revendication 10, dans lequel lesdits M indicateurs de débit d'émission sont des index vers une table représentant des combinaisons de modulation et de codage possibles.

14. Station de base (106) comprenant :

un récepteur (140) pour recevoir un signal de rétroaction (102b) en provenance d'un dispositif formant terminal mobile (104), dans lequel ledit signal de rétroaction comprend une pluralité de M indicateurs de débit d'émission correspondant à M modes d'émission et à un ordre de traitement d'antenne,
la station de base étant **caractérisée par**
l'ordre de traitement d'antenne étant déterminé par une sélection d'antenne qui supporte pour chacun des M modes d'émission le débit d'émission de somme le plus grand d'un flot de bits d'entrée au niveau de la station de base,
un calculateur de débit (144) pour traiter le signal de rétroaction pour obtenir pour chaque mode au moins un indicateur de débit d'émission (123-1, 123-2, 123-K) non inclus dans le signal de rétroaction ;
un modificateur de débit (146) pour ajuster pour chaque mode l'au moins un indicateur de débit d'émission obtenu selon un facteur d'attribution de puissance ou d'attribution de code pour un signal de données par paquet ;
un sélecteur de mode (148) pour sélectionner un mode de transmission (121) en se basant sur l'au moins un indicateur de débit d'émission ajusté de chaque mode ;
un sélecteur d'antenne (155) pour sélectionner un ensemble d'antennes actives (120-1, 120-2, 120-N) en se basant sur l'ordre de traitement d'antenne contenu dans le signal de rétroaction ; et
un émetteur (152) pour émettre le signal de données par paquet (126) en utilisant l'ensemble sélectionné d'antennes, le mode d'émission sélectionné, et les débits de données d'émission déterminés pour les antennes sélectionnées selon le mode sélectionné, de sorte que l'émetteur (152) émet le signal de données par paquet (126) en ayant un flot de bits d'entrée (122) démultiplexé en un ou plusieurs flots secondaires (124-1, 124-2, 124-N), le nombre de flots secondaires K dépend du mode d'émission sélectionné (121), chaque flot secondaire est codé, le débit de chaque flot secondaire dépend de l'au moins un indicateur de débit de données d'émission obtenu (123-1, 123-2, 123-K), les flots secondaires codés sont émis par l'ensemble sélectionné d'antennes actives sélectionnées à partir des N antennes d'émission en fonction d'un signal de sélection de meilleure antenne (125), de sorte que K est égal ou inférieur à N, de sorte que le signal de sélection de meilleure antenne (125) est déterminé en traitant le signal de rétroaction.

15. Station de base selon la revendication 14, dans lequel ledit calculateur de débit obtient un ordre de codage selon l'au moins un mode d'émission à partir de l'ordre de traitement d'antenne contenu dans le signal de rétroaction.

16. Station de base selon la revendication 14, dans laquelle ledit modificateur de débit compense les indicateurs de débit d'émission obtenus par un terme de correction.

17. Station de base selon la revendication 16, dans lequel ledit terme de correction dépend d'un indice d'antenne et d'un rapport entre un facteur d'attribution de code instantané et une valeur référencée du facteur d'attribution de code.

18. Station de base selon la revendication 16, dans laquelle ledit terme de correction dépend d'un indice d'antenne et d'un rapport entre le facteur d'attribution de puissance instantanée et une valeur référencée du facteur d'attribution de puissance.

19. Station de base selon la revendication 16, dans laquelle ledit terme de correction dépend d'un indice d'antenne, d'un rapport entre un facteur d'attribution de code instantané et une valeur référencée du facteur d'attribution de code, et d'un rapport entre un facteur d'attribution de puissance instantanée et une valeur référencée du facteur d'attribution de puissance.

20. Station de base selon la revendication 14, dans laquelle ledit modificateur de débit utilise une opération de mise à l'échelle pour représenter des fluctuations dans les facteurs d'attribution de puissance et de code.

21. Station de base selon la revendication 14, dans laquelle ledit sélecteur de mode sélectionne le mode d'émission en se basant sur un débit de données sommées de chaque mode.

22. Station de base selon la revendication 21, dans laquelle ledit sélecteur de mode sélectionne le mode d'émission le plus bas parmi les modes d'émission qui donnent le débit de données sommées le plus élevé.

23. Station de base selon la revendication 21, dans laquelle ledit émetteur comprend un calculateur de puissance d'émission qui détermine la puissance d'émission pour chaque antenne en se basant sur les débits de données d'émission déterminés pour les antennes sélectionnées selon le mode sélectionné.

24. Station de base selon la revendication 14, dans laquelle ledit signal de données par paquet inclut une signalisation à action directe concernant la composition des flots secondaires de données.

25. Station de base selon la revendication 14, dans laquelle ledit émetteur utilise l'ordre de traitement d'antenne pour réduire le nombre de bits dans la signalisation à action directe.

26. Station de base selon la revendication 14, dans laquelle ledit modificateur de débit modifie en outre l'au moins un indicateur de débit d'émission obtenu selon la quantité de bits de données mis en tampon dans une file d'attente.

27. Réseau (100) comprenant :

    au moins un dispositif formant terminal mobile (104) ; et
    au moins une station de base (106) selon l'une quelconque des revendications 14 à 26.

28. Réseau selon la revendication 27, dans lequel lesdites antennes d'émission peuvent être co-localisées au niveau du même site de station de base ou au niveau de sites de station de base différents.

29. Réseau selon la revendication 27, dans lequel chaque dispositif formant terminal mobile inclut :

    un récepteur (130) pour recevoir un signal en provenance de chacun des N antennes d'émission ;
    un processeur (131) pour produire le signal de rétroaction réduit pour M modes d'émission en réponse à la réception des signaux en provenance des N antennes d'émission, ledit signal de rétroaction réduit pour M modes d'émission inclut :

        les M indicateurs de débit d'émission ; et
        l'ordre de traitement d'antenne qui indique l'ordre qui pourrait être utilisé pour détecter les signaux (126) correspondant à chacun des M modes d'émission ; et
        un émetteur (138) pour émettre le signal de rétroaction réduit.

30. Réseau selon la revendication 27, dans lequel chaque station de base inclut :

    un récepteur (140) pour recevoir le signal de rétroaction réduit en provenance dudit au moins un dispositif formant terminal mobile ;
    un calculateur de débit (144) pour traiter le signal de rétroaction réduit pour obtenir au moins un indicateur de débit d'émission (123-1, 123-2, 123-N) non inclus dans le signal de rétroaction ;
    un modificateur de débit (146) pour ajuster l'au moins indicateur de débit d'émission obtenu selon un facteur d'attribution de puissance ou d'attribution de code pour un signal ;
    un sélecteur de mode (148) pour sélectionner un mode de transmission en se basant sur l'au moins un indicateur de débit d'émission ajusté ;
    un sélecteur d'antenne (150) pour sélectionner un ensemble d'antennes actives ; et
    un émetteur (152) pour émettre [[a]] le signal de données par paquet (126) en utilisant l'ensemble sélectionné d'antennes, le mode d'émission sélectionné, et les débits de données d'émission déterminés pour les antennes sélectionnées selon le mode sélectionné.

**31.** Procédé (300) pour mettre en oeuvre une technique de Commande de Débit Sélective par Antenne, S-PARC, dans un réseau de communications sans fil (100), ledit procédé comprenant les étapes de :

émission (302) d'un signal en provenance de chacune de N antennes d'émission (120-1, 120-2, 120-N) dans une station de base (106) vers un dispositif formant terminal mobile (104) ;
production (304), dans ledit dispositif formant terminal mobile, d'un signal de rétroaction réduit (102b) en réponse à la réception des signaux, ledit signal de rétroaction réduit pour M modes d'émission inclut :

M indicateurs de débit d'émission (124) ; et
un ordre de traitement d'antenne (136) qui indique l'ordre qui pourrait être utilisé pour détecter les signaux correspondant à chacun des M modes d'émission ; et
émission (306), à partir dudit dispositif formant terminal mobile, le signal de rétroaction réduit à la station de base ; et
traitement (308), dans ladite station de base, du signal de rétroaction réduit pour déterminer quel mode et débits d'émission vont en réalité être utilisés pour émettre des flots secondaires de données (124-1, 124-2, 124-N) en provenance d'antennes d'émission sélectionnées vers ledit dispositif formant terminal mobile, ledit procédé étant en outre **caractérisé par** :

ladite station mobile déterminant l'ordre de traitement d'antenne en déterminant une sélection d'antenne qui supporte pour chacun des M modes d'émission le débit d'émission de somme le plus grand d'un flot de bits d'entrée démultiplexé et codé au niveau de la station de base en K flots secondaires, dans lequel K est égal ou inférieur à N,
le signal de rétroaction indiquant pour chaque mode quand il est traité au niveau de la station de base, un signal de mode qui détermine le nombre K de flots secondaires, au moins un indicateur de débit (123-1, 123-2, 123-K) pour déterminer le débit de chaque flot secondaire et un signal de sélection de meilleure antenne pour sélectionner une ou plusieurs antennes à partir des N antennes pour émettre les K flots secondaires.

**32.** Procédé selon la revendication 31, dans lequel ladite station de base, en déterminant quels mode et débits d'émission vont en réalité être utilisés pour émettre des flots secondaires de données audit dispositif formant terminal mobile, détermine également des débits d'émission pour tous les modes.

**33.** Procédé selon la revendication 32, dans lequel ladite station de base utilise les M débits d'émission en plus de la puissance d'émission, du nombre disponible de codes et de données disponibles dans la file d'attente pour déterminer quels mode et débits d'émission vont en réalité être utilisés pour émettre N flots secondaires de données audit dispositif formant terminal mobile.

**34.** Procédé selon la revendication 32, dans lequel ledit dispositif formant terminal mobile détermine chaque débit d'émission M en déterminant un rapport signal sur interférence plus bruit, SINR, d'un signal émis par chaque antenne d'émission N.

**35.** Procédé selon la revendication 32, dans lequel ledit dispositif formant terminal mobile détermine ledit ordre de traitement d'antenne en obéissant à une propriété de sous-ensemble si, pour tous les n = 2, 3, ..., N, où la sélection d'antenne pour le mode-(n-1) est un sous-ensemble de la sélection d'antenne pour le mode-n.

**36.** Procédé selon la revendication 32, dans lequel ledit dispositif formant terminal utilise au plus M+1 mots pour produire le signal de rétroaction réduit, où
les M premiers mots contiennent les bits nécessaires pour identifier les M débits d'émission dans le signal de rétroaction réduit ; et
le dernier mot contient les bits nécessaires pour identifier l'ordre de traitement d'antenne dans le signal de rétroaction réduit.

**37.** Procédé selon la revendication 36, dans lequel ledit dispositif formant terminal mobile utilise l'ordre de traitement d'antenne pour réduire davantage le nombre de bits nécessaires pour identifier les M débits d'émission dans le signal de rétroaction réduit.

**38.** Procédé selon la revendication 36, dans lequel ledit dispositif formant terminal mobile utilise l'ordre de traitement d'antenne pour permettre l'utilisation d'un débit de système de codage par modulation de débit plus élevé, MCS, afin d'éviter une limitation MCS.

**39.** Procédé selon la revendication 36, dans lequel ladite station de base utilise l'ordre de traitement d'antenne pour réduire le nombre de bits dans la signalisation à action directe nécessaire pour avertir le dispositif formant terminal mobile d'une composition des flots secondaires de données à envoyer au dispositif formant terminal mobile.

**40.** Procédé selon la revendication 31, dans lequel ledit dispositif formant terminal mobile est configuré pour utiliser un accès par paquets en liaison descendante haut débit, HSPDA, en présence d'une norme d'accès multiple par répartition en code à large bande, WCDMA.

FIG. 1

```
                                                                    200
  ┌──────────────────────────────────────────────────┐
  │   BASE STATION TRANSMITS A SIGNAL FROM EACH        │   202
  │   TRANSMIT ANTENNA TO MOBILE TERMINAL DEVICE       │
  └──────────────────────────────────────────────────┘
                          │
                          ▼
  ┌──────────────────────────────────────────────────┐
  │  MOBILE TERMINAL DEVICE PROCESSES THE SIGNALS      │  -204
  │   TO GENERATE "FULL"   FEEDBACK SIGNAL             │
  └──────────────────────────────────────────────────┘
                          │
                          ▼
  ┌──────────────────────────────────────────────────┐
  │   MOBILE TERMINAL DEVICE TRANSMITS "FULL"          │  -206
  │      FEEDBACK SIGNAL TO BASE STATION               │
  └──────────────────────────────────────────────────┘
                          │
                          ▼
  ┌──────────────────────────────────────────────────┐
  │    BASE STATION PROCESSES "FULL" FEEDBACK SIGNAL TO│
  │  DETERMINE WHICH MODE AND TRANSMISSION RATE(S) ARE │  208
  │  GOING TO BE USED TO TRANSMIT DATA SUBSTREAM(S) FROM│
  │ THE "BEST" TRANSMIT ANTENNA(S) TO MOBILE TERMINAL DEVICE│
  └──────────────────────────────────────────────────┘
```

FIG. 2

```
                                                                    300
  ┌──────────────────────────────────────────────────┐
  │   BASE STATION TRANSMITS A SIGNAL FROM EACH        │  -302
  │   TRANSMIT ANTENNA TO MOBILE TERMINAL DEVICE       │
  └──────────────────────────────────────────────────┘
                          │
                          ▼
  ┌──────────────────────────────────────────────────┐
  │  MOBILE TERMINAL DEVICE PROCESSES THE SIGNALS      │  -304
  │   TO GENERATE "REDUCED" FEEDBACK SIGNAL            │
  └──────────────────────────────────────────────────┘
                          │
                          ▼
  ┌──────────────────────────────────────────────────┐
  │   MOBILE TERMINAL DEVICE TRANSMITS "REDUCED"       │  306
  │      FEEDBACK SIGNAL TO BASE STATION               │
  └──────────────────────────────────────────────────┘
                          │
                          ▼
  ┌──────────────────────────────────────────────────┐
  │  BASE STATION PROCESSES "REDUCED" FEEDBACK SIGNAL TO│
  │  DETERMINE WHICH MODE AND TRANSMISSION RATE(S) ARE │  308
  │  GOING TO BE USED TO TRANSMIT DATA SUBSTREAM(S) FROM│
  │ THE "BEST" TRANSMIT ANTENNA(S) TO MOBILE TERMINAL DEVICE│
  └──────────────────────────────────────────────────┘
```

FIG. 3

**FIG. 4**

**FIG. 5**

DECODING ORDER

1st     2nd     3rd     4th

Q: QPSK
S: 16QAM
X: DO NOT USE

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1187385 A1

- WO 0203568 A

**Non-patent literature cited in the description**

- **SEONG TAEK CHUNG et al.** Approaching Eigenmode BLAST Channel Capacity Using V-BLAST with Rate and Power Feedback. *Proc. IEEE VTC'02-Fall,* October 2001